# EUROPEAN PATENT SPECIFICATION

(11) **EP 3 879 798 B1**
(45) Date of publication and mention of the grant of the patent: **26.03.2025**
(21) Application number: 20382181.4
(22) Date of filing: 12.03.2020
(51) Int. Cl.: H04L 67/568, H04L 67/1097, H04L 67/60

(54) **METHOD FOR DYNAMIC SELECTING DELIVERY RESOURCES AND POLICIES IN CONTENT DELIVERY NETWORKS BASED ON CONTENT POPULARITY**
VERFAHREN ZUR DYNAMISCHEN AUSWAHL VON BEREITSTELLUNGSRESSOURCEN UND RICHTLINIEN IN INHALTSBEREITSTELLUNGSNETZWERKEN AUF BASIS VON INHALTSPOPULARITÄT
PROCÉDÉ DE SÉLECTION DYNAMIQUE DE RESSOURCES ET DE POLITIQUES DE DISTRIBUTION DANS DES RÉSEAUX DE DISTRIBUTION DE CONTENU BASÉS SUR LA POPULARITÉ DU CONTENU

(43) Date of publication of application: 15.09.2021
(73) Proprietor: Telefonica, S.A., 28013 Madrid (ES)
(72) Inventor: CANO HILA, Francisco, José, 28013 MADRID (ES); ESONO FERRER, Daniel, 28013 MADRID (ES); DE SILONIZ SANDINO, Alfonso, 28013 MADRID (ES); SILVESTRE PADROS, Antoni, 28013 MADRID (ES)
(74) Representative: Herrero & Asociados, S.L.

(56) References cited:
- US-A1- 2019 007 515

## Description

### Field of the invention

The present invention has its application within the telecommunication networks, more specifically, relates to content delivery networks (CDN).

More particularly, the present invention refers to a dynamic method of selecting delivery resources (streamer, proxy, cache, etc.) and/or delivery policies in a CDN based on real time content popularity.

### Background of the invention

The streamer selection in a content delivery network (CDN), typically known as Request Routing process, assigns the most suitable (CDN) streamer to every end user content request. This selection process usually takes into account several aspects, as for example the specific content requested by the user, its IP address, the streamers load and their availability, etc.

Typically, the contents distributed by a CDN are very different from each other. In particular, in the case of video distribution, the content is divided in two main categories: the Video on Demand (VoD) content and the Live content. Despite both share the same video formats, there are important differences between them:
- Catalog size (i.e. the number of contents): the catalog size in the case of VoD is much larger than Live. In the case of VoD the size of the catalog could range from thousands to tens of thousands of content, while in the case of live content typically is on the order of hundreds.
- Popularity: the number of users who see the same content during a certain period is much higher in the case of Live.
- Simultaneity of requests (concurrency): the number of users who are simultaneously consuming the same content is much higher in Live than in VoD.

Considering the content popularity, in addition to the aforementioned parameters (specific requested content, IP address, streamers load and availability, etc.), in the final decision about the most suitable streamer could be very useful to optimize a content delivery network. The efficiency and the performance of a CDN is highly influenced by the popularity of the content, being higher the higher the popularity of the content.

Because a CDN is not able to modify the popularity of the content that is distributing, it is important that the CDN is able to adapt its behavior to the content popularity.

The content that is delivered through the CDN has very different popularity levels.

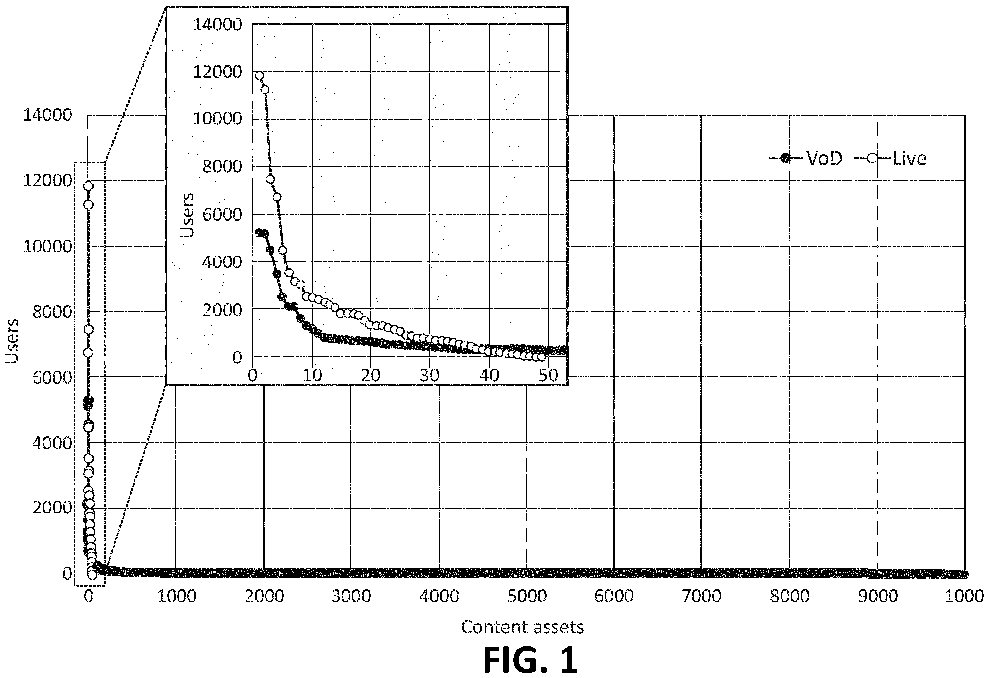

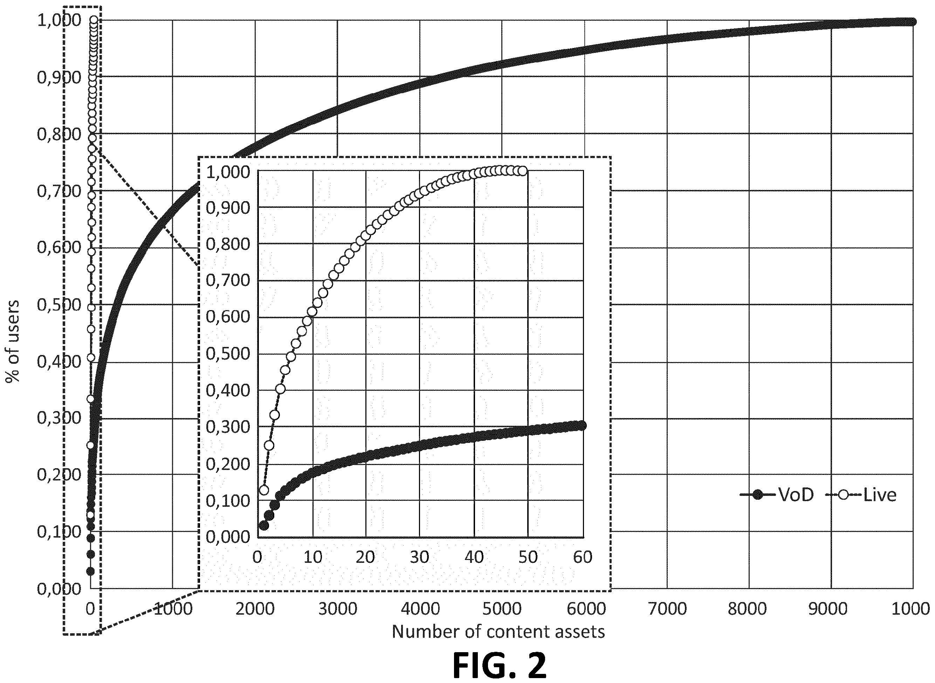

Figures 1 and 2 show graphical representations of the number of users per content versus the number of Live and VoD contents during a busy hour.

As shown in Figure 1, the popularity of the most popular Live content is much greater than that of VoD and also the concurrence of Live is much greater than the concurrence of VoD. However, as also shown in Figure 1, it can be seen that some VoD content can reach popularities comparable to the less popular Live content, and in same specific cases, for example the premiere of some VoD contents (e.g. a new season of a TV series), VoD contents can reach popularity values comparable to the more popular Live contents.

In Figure 2, the big differences in terms of content popularity between Live and VoD video contents can also be clearly shown. Almost the 100% of the users watch less than 50 channels. While only 50 contents are needed to have all the live users watching one of them, wth 50 VoD contents, only the 30% of the users are reached. For VoD, an increased number of contents is required: 2.000 contents are needed to get the 80% of the users and up to 10.000 contents are needed to reach all the VoD users.

In practice, if the number of users watching VoD content in a medium PoP (Point of Presence) during a full day is analysed, it is found out that more than 40% of the contents are watched only by one user and that the 95% of the contents are watched by less than ten users. In conclusion, the concurrence of VoD content is very low.

In a CDN where the request routing policy is mainly based on network topology, which is the most common situation, the content is distributed over all the available PoPs according to the end-user's IP address. As the number of PoPs increases, if no other restriction is applied, the less popular content will be distributed over all the PoPs (e.g. within 50 PoPs in a country like Spain) making that the relative popularity of these contents in each PoP is extremely low.

The low popularity of VoD content, its low time concurrency and the distribution of requests among a large number of PoPs have the following negative effects on the CDN behavior:
- Reduction of the Cached Hit Ratio (CHR), because the probability that more than one user requests the same content during large periods of time is very low, the content being highly likely to be removed from the cache. The probability of receiving content requests that only one user will request also increases.
- Increase in the CDN response times, because if the requested content is not available in the streamer cache (i.e., cache miss scenario), the streamer has to fetch the content from another element (from a proxy or from an origin server) and this takes an extra time.
- High volume of traffic to Origin Servers, because of the increase in the probability of cache miss.
- Low performance of the CDN streamers, mainly because the low popularity content needs more I/O operation against the storage of the streamer, typically based on HDD (hard disk drive) or SSD (solid state drive) technologies with I/O operations speed much lower that RAM memory where the more popular content is stored.

In summary, a CDN that does not manage the content according to its popularity will have a poor efficiency, it will require more resources for delivering the same traffic, and it will provide a worst quality of experience (QoE) to its end users due to its larger response times.

Another important point to be taken into account is that the popularity of content is somewhat dynamic by nature, for example, the same content could be popular during a particular period and non-popular during the rest. In addition, the popularity of a content can be different across the CDN geography, for example to local contents available only to specific regions of a country or due to the different nature of the PoP, where same of them could concentrate high volumes of traffic (e.g. from other networks) while other only manage traffic from local users.

The calculation of the content popularity and its application to the streamer selection process is not a common practice in the industry. At most there are some solutions where the content popularity is not dynamically calculated but is a predefined value associated to each content, or group of contents, which is manually configured and that could be used during the streamer selection process.

There are existing CDNs which does not calculate the popularity dynamically, but they take into account the popularity as an attribute preconfigured by the content provider in the content provision phase or they analyze offline the content popularity to assign different labels to the content (labels which are used during the streaming selection phase) partially based on its popularity. If the popularity is a preconfigured value provided by the Content Provider and it is not calculated by the CDN, the limitation relays on the capability of the Content Provider to provide the popularity information in realtime and also the lack of granularity, because the Content Provider will not be able to provide the popularity information per CDN PoP. In this case, the popularity information is not used by these CDNs for the streamer selection but only for the selection of a specific tier in the cache storage and for content preposition.

Other existing CDNs calculate the content popularity per streamer in order to choose the specific tier in the cache storage. In this case, the popularity calculation is performed locally per streamer with any aggregation at PoP level and the calculated popularity information is not used for the streamer selection but only for the selection of a specific tier in the cache storage.

Another existing solution is described in US8688837B1, which dynamically translates resource identifiers for Request Routing using popularity information. A popularity identifier is included in the "DNS part of the URL" (i.e. the domain name) in order to use this popularity information during the Request Routing process. The popularity information can be included by the Content Provider according the information retrieved from the CDN as part of the registration phase or can be added by the CDN itself during the Request Routing process, but in both options, the popularity information used by the Request Routing is static (not real-time) information. The main limitation of the proposed mechanism is that it is based exclusively on DNS resolution. In the case where the Content Provider does not include this popularity information in the domain name and the CDN has to calculate it directly, there is a very important limitation since the hostname does not usually include any information that identifies the specific content requested by the user. The usual practice in the industry is to include the information of the specific content in the path of the URL (Uniform Resource Locator) and not in the domain name, where at most a parameter can be included that identifies a group of contents but never an individual content. This is because the content catalogs are usually very large, with thousands or tens of thousands of contents, which implies that including this individual identification would greatly increase the number of hostnames to be resolved and together with the reduced lifetime of these resolutions, would generate a major congestion problem in DNS (Domain Name System) servers. In practice, this existing solution is not very feasible due to its lack of scalability. If the popularity information is included in the Content Provider, the usefulness of the solution depends on how it is able to obtain it and its granularity. In addition, in this case the CDN cannot use the popularity information from other Content Providers that do not have that capability.

As the popularity calculation is not performed dynamically in the existing solutions, the adaptation of the CDN behavior to the real popularity of the content is too limited.

US2019007515 describes a system in which includes a cache hierarchy comprising multiple cache levels that maintain at least some resources for the content provider, and one or more request managers for processing client requests for resources and retrieving the resources from the cache hierarchy. In response to a resource request, the request manager selects a cache level from the cache hierarchy based on a popularity associated with the requested resource, and attempts to retrieve the resource from the selected cache level while bypassing cache level(s) inferior to the selected level.

Therefore, there is a need in the state of the art for providing a dynamic method for adapting the selection of streamers to the real time popularity of the contents in content delivery networks.

### Summary of the invention

The present invention solves the aforementioned problems and overcomes previously explained state-of-art work limitations by providing an improved Request Routing for content delivery networks (CDN), upgraded with content popularity information obtained in real time, which allows the operating logic of the CDN to be adjusted dynamically to the audience's behavior.

More particularly, the present invention allows the CDN to concentrate the requests to non-popular content in a reduced number of resources (e.g., CDN streamers), increasing the relative popularity of these contents in these streamers and consequently improving their performance. On the other hand, the CDN can take advantage of its entire footprint in order to reduce the high network traffic associated to very popular contents (e.g. sports events).

The present invention can be applied to the dynamic selection of content delivery network (CDN) streamers, as aforementioned, but also to the dynamic selection of different cache resources (e.g. cache tier) and/or to dynamically select different distribution policies (e.g. specific cache rotation policy, specific expiration times, specific distribution path, etc.) based on the content popularity. In addition, the present invention can be used for the selection of different proxies in the case of a hierarchical distribution in the operating logic of the CDN.

In the context of the invention, a delivery resource refers to at least one of: a CDN streamer, a proxy, or any physical or logical resource belonging to the CDN streamers or to the proxies (e.g., a cache, a content part, etc.), or any other resource selected by the CDN to be used in the delivering of a multimedia content requested by a user. In addition, a delivery policy refers to any delivery functionality, characteristic o behavior applied in the delivering of a multimedia content requested by a user; e.g., cache rotation policy, specific expiration times, specific distribution path, etc.

The invention relates to a method, as further defined in claim 1, for dynamically selecting delivery resources and policies in CDNs based on content popularity.

The improvement of the Request Routing capable of adapting dynamically to the popularity of the contents allows:
- a dynamic adaptation to the service provided in the network according to the user's behaviour,
- improved efficiency of the CDN infrastructure,
- reduction of operational and new infrastructure investments costs, and
- improved user experience.

The method in accordance with the above described aspects of the invention has a number of advantages with respect to the aforementioned prior art, which can be summarized as follows:
- The present invention allows CDNs to be more efficient and more flexible for content (e.g., video) delivery. In the existing CDN products or services, on one hand, the Content Provider typically statically provisions the popularity instead of being calculated dynamically by the CDN, and on the other hand, this popularity information is not used in general for the selection of the streamers.
- The feasibility of the proposed Request Routing process. Other existing solutions apply a DNS based request routing with very important scalability limitation.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a graphic of the number of users per content versus the number of Live and Video on Demand contents, according to a possible scenario in the state of the art.
Figure 2 shows a graphic of the number of users per content versus the number of Live and Video on Demand contents, according to a possible scenario in the state of the art.
Figure 3 shows a block diagram of the processes for recollecting and distributing audience information
Figure 4 shows a flow diagram of the Redirecting process of Live content based on popularity, according to a preferred embodiment of the invention.
Figure 5 shows a flow diagram of the Redirecting process of Video on Demand content based on popularity, according to a preferred embodiment of the invention.
Figure 6 shows a graphic of the Video on Demand traffic versus time with the application of traffic concentration according to a possible embodiment of the invention and without applying said traffic concentration.
Figure 7 shows a graphic of the streamer performance with the application of traffic concentration according to a possible embodiment of the invention and without applying said traffic concentration.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the invention relates to a method for selecting content delivery network (CDN) streamers dynamically by the Request Router of a CDN.

Firstly, the streamers calculate in real time the audience of each content. The streamers perform this audience calculation for each content and for each "optimal delivery PoP", that is, the PoP that would be chosen if the popularity criteria were not considered. The streamers have all the needed information to calculate the audience for each content as they receive the complete URL (Uniform Resource Locator) identifying the content requested by the end user. Then, each streamer periodically sends all the calculated audience information, counting unique individual users, to the Request Router.

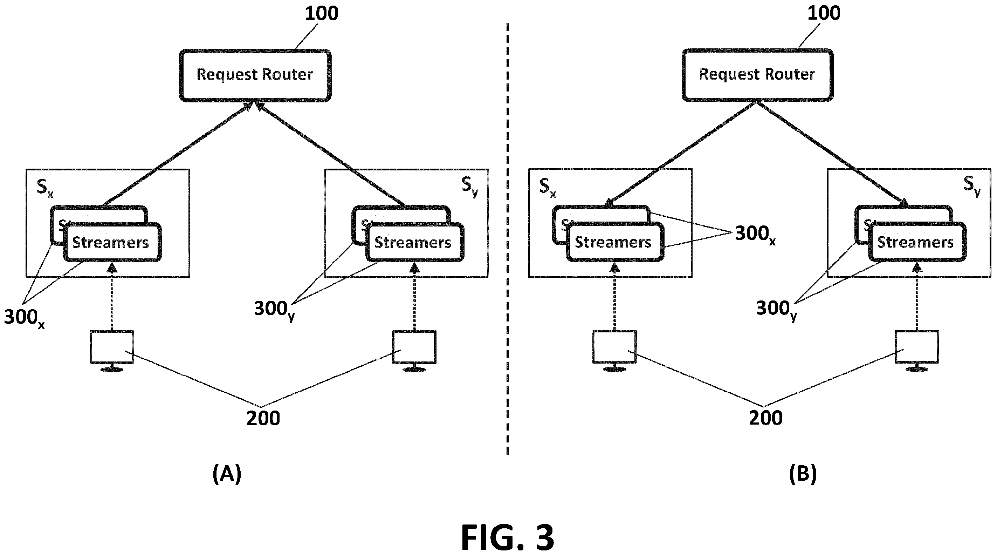

As shown in Figure 3A, the Request Router (100) recollects all the information about the audience (200) of each content (e.g., information about the viewers of video contents) calculated by the CDN streamers (300ₓ, 300_{y}) of each PoP or site (Sₓ, S_{y}) of the CDN. All the recollected information is aggregated by the Request Router (100) to obtain information of the global audience for each content and for each optimal PoP. In turn, as shown in Figure 3B, the Request Router (100) distributes this aggregated audience information to all the streamers (300ₓ, 300_{y}) of every site (Sₓ, S_{y}) which store this global information. Therefore, all the streamers (300ₓ, 300_{y}) know -have stored- the relevant audience information in the overall region to apply the corresponding logic which, in turn, is later applied to a specific policy in the process of selecting the streamers (300ₓ, 300_{y}) by the Request Router (100).

This functionality allows the definition of audience thresholds per content and delivery PoP. The differentiated thresholds for VoD and Live contents are used to determine whether a content is considered popular or non popular in a delivery PoP. Based on this classification of contents into popular or non popular, a specific logic is applied in each case during the streamer selection phase (i.e. Request Routing phase).

For example, a possible logic of Request Routing for a CDN based on the content popularity can be seen in Table 1. In this example, the VoD traffic is by default concentrated in a reduced number of streamers with the aim of maximizing the popularity and relative concurrence of VoD content (i.e., mitigating the negative effects of its longtail nature), except when it becomes popular enough to be delivered efficiently from a greater number of streamers. On the other hand, the Live traffic is considered always popular enough to be delivered from any streamer in the CDN, but the popularity is used to determine whether the traffic associated to each channel can be managed only by one streamer per PoP, maximizing the cache hit ratio, or whether more streamers are needed (if the latter, the traffic of the channel is distributed over all the streamers of each PoP, reducing the impact of a streamer failure in the end users of a high audience live channel).

**Table 1**

| | **Content audience < Threshold** | **Content audience > Threshold** |
|---|---|---|
| VoD content | Concentrate traffic only in "VoD concentrator streamers" | Distribute traffic over the threshold prioritizing the network topology criteria |
| Live content | Distribute traffic prioritizing the network topology criteria but selecting one specific streamer per PoP for each content | Distribute traffic prioritizing the network topology criteria but loadsharing the traffic within all the streamers of the PoP |

Furthermore, the functionality allows the definition of which streamers have the role of concentrating the traffic. When more than one concentrator streamer is defined, the functionality allows the optimal one in terms of network topology. The definition of this concentrators allows the CDN operator to use specialized hardware in order to improve the performance for specific traffic patterns; for example, in the case of concentrating long tail VoD traffic, the use of high-speed storage technologies can double the performance of the streamers.

The functionality also allows avoiding the traffic overloads to the origin servers during deconcentration including concentrators as intermediate proxies.

Typically, the request routing mechanisms used in the CDNs are based on HTTP redirections and can include additionally DNS redirections. In a preferred embodiment, the elements in charge of performing the HTTP redirections (also known as redirectors) have the global audience information distributed by the Request Router (100) server as explained before (typically these redirectors are also streamers). When redirectors receive a content request, they identify the content, the optimal delivery PoP without considering popularity information and the current audience of the identified content is compared with the predefined thresholds by the redirectors. The redirectors apply the predefined popularity policy adding a specific popularity tag to the hostname of the new URL included in the location field of the HTTP Redirection answer. This popularity tag represents the popularity policy to be applied to the streamer selection of this specific content request. The popularity tag is especially useful in the case of a CDN using the DNS protocol for the communication between the end users or audience (200) and its Request Router (100).

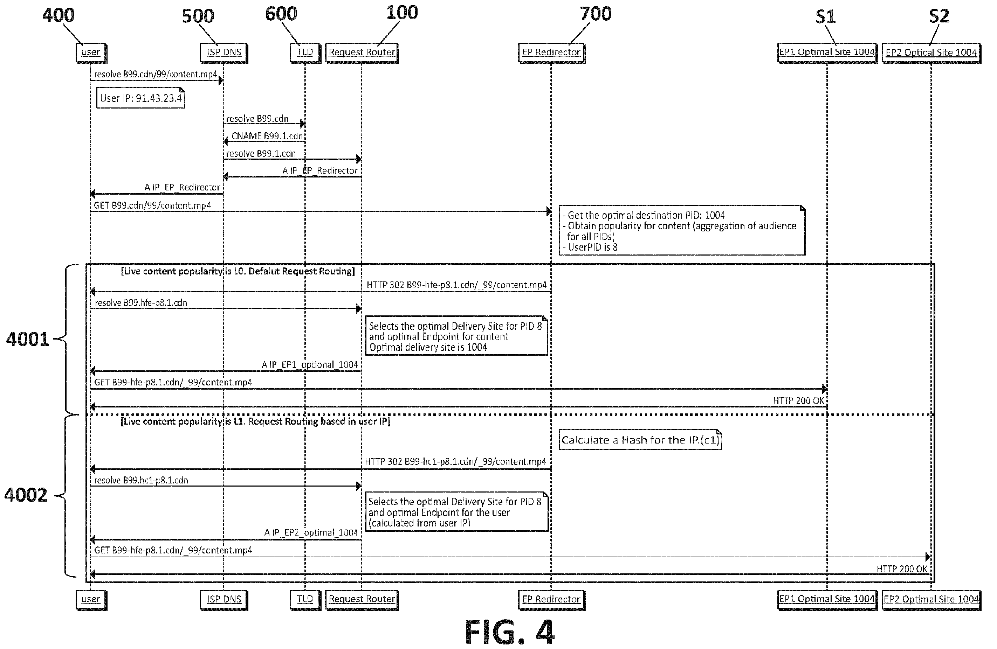

Figures 4-5 show the content request flow diagrams in the case of Live and VoD contents respectively, in the particular example of applying the popularity policy defined in Table 1. In this case the popularity tags used in this example are:
- "V0" for VoD non popular content
- "V1" for VoD popular content
- "L0" for Live non popular content
- "L1" for Live popular content

### - Live Content

As shown in Figure 4, the content flow starts when a user (400) requests a live video content using an URL that is provided by the Video portal, using the DNS server (500) of the user's ISP, Interner Service Provider. After name resolution with the CDN Top Level Domain (600), TLN, and the Request Router (100), the request is sent to a Redirector (700) element in charge of obtaining the information from the users, something that usually is not possible during the DNS resolution process.

The Redirector (700) is a streamer that have the audience information recollected by the Request Router (100), i.e. the global audience information, as shown in Figure 3A, and according to that information the Redirector (700) can decide:
- In case (4001) that the content audience is less than the defined global threshold, the requested Live content is tagged as non popular and so "L0" popularity policy is executed. According to the example of Table 1, "L0" policy is applied by assigning the content request to one streamer in an optimal PoP (S1). The optimal PoP (S1) is where the content is the most likely to be. Therefore, "L0" policy maximizes effectiveness of cache hit ratio, CHR.
- In the opposite case (4002), the Live content is popular and so a very high audience (e.g., thousands of users) live content cannot be distributed to just one streamer, as directing all these users to only one delivery resource (i.e., one streamer) could make a high impact in case of a problem on this resource. So it is preferable to distribute the requests among all the streamers in the optimal site or PoP (S2) of said content, that is, apply policy tagged as "L1".

All the decisions are made in the Edge with the information collected among the streamers in the Request Router (100).

### - VoD Content

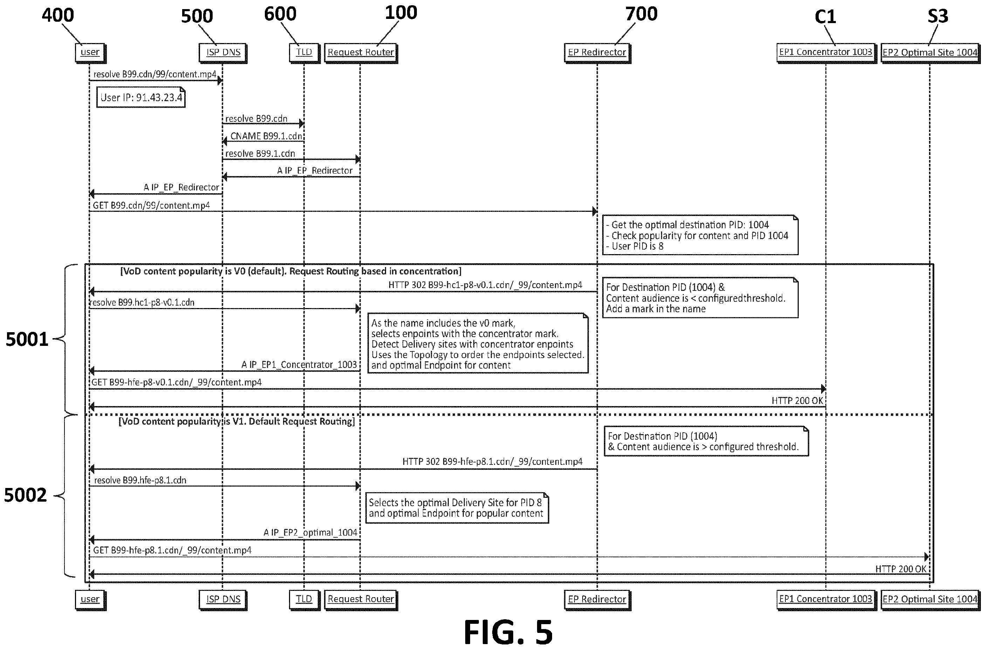

In Figure 5, VoD content flow is shown. In this case, the mechanism of Request Routing takes in account than VoD content with low popularity, i.e., the audience is under the predefined threshold, should be concentrated to increase the effectiveness of CHR (cache hit ratio). But as for live content, Request Routing using DNS resolution does not have information about the specific content that is being requested, so again, a Redirector (700) element takes charge of making a decision about the content to apply one or another policy, based on the popularity (comparison with the audience threshold):
- If the content popularity is less than a threshold, it is the case (5001) in which the content popularity is considered low and "V0" policy is applied by concentrating the request. In this case, the Redirector (700) includes a tag in the name for the Request Router (100). In this second name resolution, the user (400) is redirected to a concentrator (C1), which is a site/PoP where the content is concentrated into one single streamer and where CHR is higher than the CHR in the optimal site streamers.
- After a while, the concurrent audience of a content increases and so it is the case (5002) in which the audience exceeds the configured threshold. After that, every new request for that content will be considered as high audience and "V1" policy is applied, so the tag disappears from the name for the Request Router (100) and the standard Request Routing policy applies. The requested content is not concentrated but distributed teaking into account the network topology criteria and the optimal PoP (S3) where the content is the most likely to be is selected.

The count and recollection of audience in this case is not global but per site/PoP of the CDN. This permits to have a smooth deconcentration when one content audience is increasing in one specific PoP, instead of switching the policy for all the CDN.

**The functionality** also considers a scenario of traffic concentration where the concentrator streamers might be congested or not available. In this case, the Request Router can manage the content request without considering the popularity information.

Using a popularity policy, as described in Table 1, many benefits are expected as follows:
- For non-popular long-tail VoD content, the ability to concentrate on a given set of streamers/PoPs in the network allows to:
   ∘ Maximize Cache Hit Ratio
   ∘ Reduce the traffic load towards the origins
   ∘ Reduce response times
   ∘ Increase streamer performance and therefore improve efficiency (reducing the cost/Gbps ratio)
   ∘ Optimize streamer HW configuration
      ▪ Specializing concentrators with high performance storage technologies (e.g. SSD or NVMe: Non-Volatile Memory Express) to further improve performance for long tail content.
      ▪ Reducing the storage in non-concentrating endpoints, thus reducing the cost of the endpoints that will be deployed with greater capillarity.
- For more popular VoD content, the decentralization of traffic to the optimal topology PoPs, taking advantage of a high Cache Hit Ratio locally and reducing network costs serving the content closer to the end user.
- In the case of Live, improving of the robustness of the service in the case of high audience live events minimizing the impact of problems in one streamer.

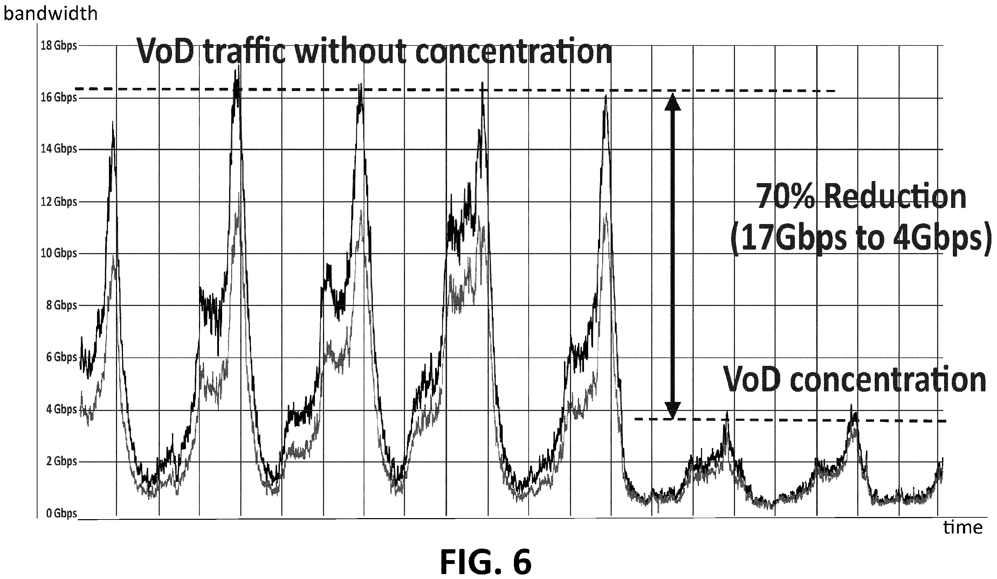

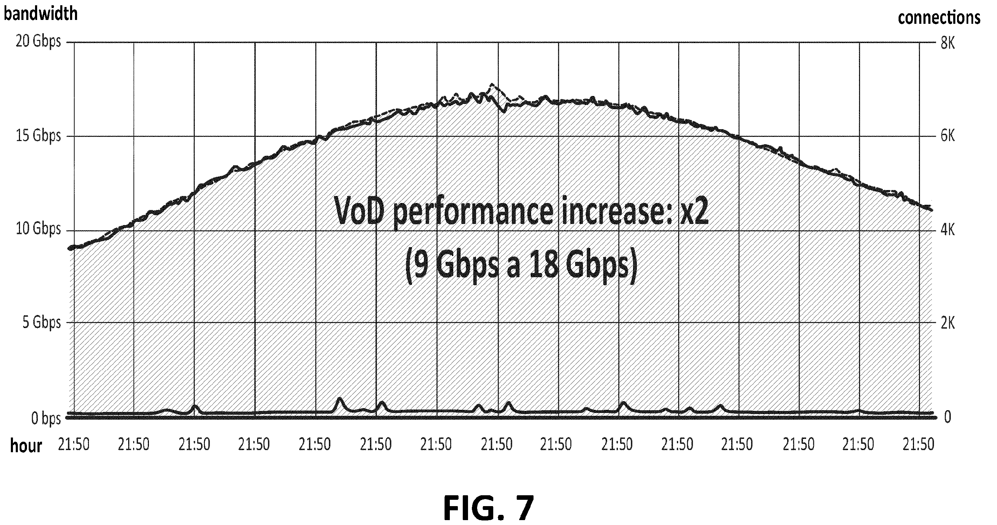

Figures 6 and 7 show some of the real benefits of the application of the VoD concentration policy based on the content popularity in a specific service provided in a CDN during a tested time period. Figure 6 shows the bandwidth of the VoD traffic delivered to the origin servers of the CDN along time and a 70% reduction (from 17Gbps to 4Gbps) in traffic when VoD concentration is applied. Figure 7 shows the traffic bandwith versus the number of connections in time and a two-times increase (from 9Gbps to 18Gbps) in the streamer performance.

The explained behavior, which has been focus on video delivery, can be applied to the distribution of any other content in a CDN.

Additionally, the dynamic calculations of content popularity can also be used to influence other functionalities of a CDN, for example:
- Content proposition: the VoD content can be propositioned in different parts of the CDN according to its popularity.
- Cache selection and delivery policies: the type of cache used for a specific content and the cache management policites (e.g. LRU: Least Recently Used, LFU: Least Frequently Used, Expiration Time configuration, distribution path selection, overflow policy selection, ...) can also consider the content popularity.

Finally, the dynamic calculations of content popularity can be improved by applying machine learning techniques in order to be able to predict the evolution of the content popularity.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A computer-implemented method for selecting delivery resources and/or delivery policies in content delivery networks, comprising:
- identifying at least a content requested by an end user of a content delivery network, CDN, which comprises a plurality of point of presences serving content;
- for each identified content, identifying one point of presence, PoP, from the plurality of point of presences, the identified PoP to be an optimal PoP in which the identified content is the most likely to be served in the absence of a popularity criteria;
**characterized by** further comprising the following steps:
- for each identified content and the optimal PoP identified for the identified content, calculating audience information in real time, wherein the audience information comprises at least a counting of the end users requesting the identified content from the optimal PoP;
- recollecting the calculated audience information from all the point of presences serving the identified content to obtain global audience information, wherein the global audience information comprises an aggregation of the calculated audience information for each optimal PoP;
- defining at least an audience threshold per identified content and PoP;
- for each identified content, determining a degree of popularity of the identified content by comparing the calculated audience information or the obtained global audience information with the defined audience threshold;
- selecting a delivery resource and/or a delivery policy to deliver the requested content by the content delivery network to the end user based at least on the degree of popularity determined for the identified content, wherein selecting the delivery resource and/or the delivery policy comprises assigning one single CDN streamer of the optimal PoP or distributing the identified content among all the CDN streamers of the optimal PoP.

2. The method according to claim 1, wherein the identified content is video content.

3. The method according to claim 2, wherein the identified content is live content or video on demand content.

4. The method according to any preceeding claim, wherein the identified content is live video content and the degree of popularity is determined by comparing the obtained global audience information with the defined audience threshold, and:
- if the degree of popularity determined for the identified content is less than the defined audience threshold, the identified content is tagged as non popular and selecting the delivery resource comprises assigning one single CDN streamer of the optimal PoP selected for the identified content; and
- if the degree of popularity determined for the identified content is equal or higher than the defined audience threshold, the identified content is tagged as popular and selecting the delivery resource comprises distributing the identified content among all the CDN streamers of the optimal PoP selected for the identified content.

5. The method according to any of claims 1-3, wherein the identified content is video on demand, VoD, content and the degree of popularity is determined by comparing the calculated global audience information per PoP with the defined audience threshold, and:
- if the degree of popularity determined for the identified content is less than the defined threshold, the identified content is tagged as non popular and selecting the delivery resource comprises concentrating the requested content into one single CDN streamer of the optimal PoP, wherein the CDN streamer of the optimal PoP has a cache hit ratio higher then the cache hit ratio of all the streamers in the optimal PoP selected for the identified content:
- if the degree of popularity determined for the identified content is equal or higher than the defined audience threshold, the identified content is tagged as popular and selecting the delivery resource and/or the delivery policy comprises distributing the identified content among all the CDN streamers of the optimal PoP selected for the identified content.

6. The method according to any of claims 4-5, wherein selecting the delivery resource and/or the delivery policy is performed by a redirector (700) which is a CDN streamer configured to calculate audience information in the PoP in which the CDN streamer is and receive the obtained global audience information from a request router (100) of the content delivery network.

7. The method according to any preceeding claim, wherein the delivery resource is selected from a CDN streamer (300ₓ, 300_{y}), a physical resource and/or a logical resource belonging to the CDN streamer (300ₓ, 300_{y}), a proxy, a physical resource and/or a logical resource belonging to the proxy, and a caching resource.

8. The method according to any preceeding claim, wherein the delivery policy is selected from cache rotation policy, an expiration time for deliverying the content and a distribution path the delivering of the content.

## Patentansprüche

1. Computerimplementiertes Verfahren zum Auswählen von Zustellungsressourcen und/oder Zustellungsrichtlinien in Inhaltzustellungsnetzen, das folgende Schritte aufweist:
- Identifizieren zumindest eines Inhalts, der durch einen Endbenutzer eines Inhaltzustellungsnetzes, CDN, angefordert wird, das eine Mehrzahl von Zugangspunkten aufweist, die Inhalt vorlegen;
- für jeden identifizierten Inhalt, Identifizieren eines Zugangspunkts, PoP, aus der Mehrzahl von Zugangspunkten, wobei der identifizierte PoP ein optimaler PoP sein soll, bei dem der identifizierte Inhalt in Abwesenheit eines Popularitätskriteriums am wahrscheinlichsten vorgelegt wird;
**dadurch gekennzeichnet, dass** dasselbe ferner folgende Schritte aufweist:
- für jeden identifizierten Inhalt und den optimalen PoP, der für den identifizierten Inhalt identifiziert wird, Berechnen von Zielgruppeninformationen in Echtzeit, wobei die Zielgruppeninformationen zumindest ein Zählen der Endbenutzer aufweisen, die den identifizierten Inhalt von dem optimalen PoP anfordern;
- erneutes Sammeln der berechneten Zielgruppeninformationen von allen Zugangspunkten, die den identifizierten Inhalt vorlegen, um globale Zielgruppeninformationen zu erhalten, wobei die globalen Zielgruppeninformationen eine Ansammlung der berechneten Zielgruppeninformationen für jeden optimalen PoP aufweisen;
- Definieren zumindest einer Zielgruppenschwelle pro identifiziertem Inhalt und PoP;
- für jeden identifizierten Inhalt, Bestimmen eines Maßes an Popularität des identifizierten Inhalts durch Vergleichen der berechneten Zielgruppeninformationen oder der erhaltenen globalen Zielgruppeninformationen mit der definierten Zielgruppenschwelle;
- Auswählen einer Zustellungsressource und/oder einer Zustellungsrichtlinie zum Zustellen des angeforderten Inhalts durch das Inhaltzustellungsnetz an den Endbenutzer basierend zumindest auf dem Maß an Popularität, das für den identifizierten Inhalt bestimmt wird, wobei das Auswählen der Zustellungsressource und/oder der Zustellungsrichtlinie ein Zuweisen eines einzelnen CDN-Streamers des optimalen PoP oder Verteilen des identifizierten Inhalts unter allen CDN-Streamern des optimalen PoP aufweist.

2. Verfahren gemäß Anspruch 1, bei dem der identifizierte Inhalt Video-Inhalt ist.

3. Verfahren gemäß Anspruch 2, bei dem der identifizierte Inhalt Live-Inhalt oder Video-on-Demand-Inhalt ist.

4. Verfahren gemäß einem der vorherigen Ansprüche, bei dem der identifizierte Inhalt Live-Video-Inhalt ist und das Maß an Popularität bestimmt wird durch Vergleichen der erhaltenen globalen Zielgruppeninformationen mit der definierten Zielgruppenschwelle und:
- wenn das Maß an Popularität, das für den identifizierten Inhalt bestimmt wird, kleiner ist als die definierte Zielgruppenschwelle, wird der identifizierte Inhalt als nicht populär markiert und weist das Auswählen der Zustellungsressource ein Zuweisen eines einzelnen CDN-Streamers des optimalen PoP auf, der für den identifizierten Inhalt ausgewählt wird; und
- wenn das Maß an Popularität, das für den identifizierten Inhalt bestimmt wird, größer oder gleich der definierten Zielgruppenschwelle ist, wird der identifizierte Inhalt als populär markiert und weist das Auswählen der Zustellungsressource ein Verteilen des identifizierten Inhalts unter allen CDN-Streamern des optimalen PoP auf, der für den identifizierten Inhalt ausgewählt wird.

5. Verfahren gemäß einem der Ansprüche 1 bis 3, bei dem der identifizierte Inhalt Video-on-Demand-, VoD-, Inhalt ist und das Maß an Popularität bestimmt wird durch Vergleichen der berechneten globalen Zielgruppeninformationen pro PoP mit der definierten Zielgruppenschwelle und:
- wenn das Maß an Popularität, das für den identifizierten Inhalt bestimmt wird, kleiner ist als die definierte Schwelle, wird der identifizierte Inhalt als nicht populär markiert und weist das Auswählen der Zustellungsressource ein Konzentrieren des angeforderten Inhalts in einen einzelnen CDN-Streamer des optimalen PoP auf, wobei der CDN-Streamer des optimalen PoP eine Cache-Trefferrate aufweist, die höher ist als die Cache-Trefferrate aller Streamer in dem optimalen PoP, der für den identifizierten Inhalt ausgewählt wird;
- wenn das Maß an Popularität, das für den identifizierten Inhalt bestimmt wird, größer oder gleich der definierten Zielgruppenschwelle ist, wird der identifizierte Inhalt als populär markiert und weist das Auswählen der Zustellungsressource und/oder der Zustellungsrichtlinie ein Verteilen des identifizierten Inhalts unter allen CDN-Streamern des optimalen PoP auf, der für den identifizierten Inhalt ausgewählt wird.

6. Verfahren gemäß einem der Ansprüche 4 bis 5, bei dem das Auswählen der Zustellungsressource und/oder der Zustellungsrichtlinie durchgeführt wird durch einen Umleiter (700), der ein CDN-Streamer ist, der dazu ausgebildet ist, Zielgruppeninformationen in dem PoP, in dem sich der CDN-Streamer befindet, zu berechnen und die erhaltenen globalen Zielgruppeninformationen von einem Anforderungs-Router (100) des Inhaltzustellungsnetzes zu empfangen.

7. Verfahren gemäß einem vorherigen Anspruch, bei dem die Zustellungsressource ausgewählt wird aus einem CDN-Streamer (300ₓ, 300_{y}), einer physischen Ressource und/oder einer logischen Ressource, die zu dem CDN-Streamer (300ₓ, 300_{y}) gehört, einem Proxy, einer physischen Ressource und/oder einer logischen Ressource, die zu dem Proxy gehört, und einer Cache-Ressource.

8. Verfahren gemäß einem vorherigen Anspruch, bei dem die Zustellungsrichtlinie ausgewählt wird aus einer Cache-Rotationsrichtlinie, einer Ablaufzeit zum Zustellen des Inhalts und einem Verteilungsweg der Zustellung des Inhalts.

## Revendications

1. Procédé mis en œuvre par ordinateur pour sélectionner des ressources de distribution et/ou des politiques de distribution dans les réseaux de distribution de contenu, comprenant :
- l'identification d'au moins un contenu demandé par un utilisateur final d'un réseau de distribution de contenu, CDN, lequel réseau comprend une pluralité de points de présence desservant du contenu ;
- pour chaque contenu identifié, l'identification d'un point de présence, PoP, parmi la pluralité de points de présence, le PoP identifié devant être un PoP optimum au niveau duquel le contenu identifié est le plus susceptible d'être desservi en l'absence d'un critère de popularité ;
**caractérisé en ce qu'**il comprend en outre les étapes suivantes :
- pour chaque contenu identifié et pour le PoP optimum identifié pour le contenu identifié, le calcul d'une information d'audience en temps réel, dans lequel l'information d'audience comprend au moins un comptage des utilisateurs finals demandant le contenu identifié au niveau du PoP optimum ;
- le recueil de l'information d'audience calculée au niveau de tous les points de présence desservant le contenu identifié pour obtenir une information d'audience globale, dans lequel l'information d'audience globale comprend une agrégation de l'information d'audience calculée pour chaque PoP optimum ;
- la définition d'au moins un seuil d'audience par contenu identifié et par PoP identifié ;
- pour chaque contenu identifié, la détermination d'un degré de popularité du contenu identifié en comparant l'information d'audience calculée ou l'information d'audience globale obtenue avec le seuil d'audience défini
- la sélection d'une ressource de distribution et/ou d'une politique de distribution pour distribuer le contenu demandé au moyen du réseau de distribution de contenu sur l'utilisateur final sur la base au moins du degré de popularité déterminé pour le contenu identifié, dans lequel la sélection de la ressource de distribution et/ou de la politique de distribution comprend l'attribution d'un unique dispositif de diffusion de flux de CDN du PoP optimum ou la diffusion du contenu identifié au sein de tous les dispositifs de diffusion de flux de CDN du PoP optimum.

2. Procédé selon la revendication 1, dans lequel le contenu identifié est du contenu vidéo.

3. Procédé selon la revendication 2, dans lequel le contenu identifié est du contenu en direct ou du contenu vidéo à la demande.

4. Procédé selon l'une quelconque des revendications précédentes, dans lequel :
le contenu identifié est du contenu vidéo en direct et le degré de popularité est déterminé en comparant l'information d'audience globale obtenue avec le seuil d'audience défini, et :
- si le degré de popularité déterminé pour le contenu identifié est inférieur au seuil d'audience défini, le contenu identifié est étiqueté comme étant non populaire et la sélection de la ressource de distribution comprend l'attribution d'un unique dispositif de diffusion de flux de CDN du PoP optimum sélectionné pour le contenu identifié ; et
- si le degré de popularité déterminé pour le contenu identifié est égal ou supérieur au seuil d'audience défini, le contenu identifié est étiqueté comme étant populaire et la sélection de la ressource de distribution comprend la diffusion du contenu identifié au sein de tous les dispositifs de diffusion de flux de CDN du PoP optimum sélectionné pour le contenu identifié.

5. Procédé selon l'une quelconque des revendications 1 à 3, dans lequel le contenu identifié est du contenu vidéo à la demande, VoD, et le degré de popularité est déterminé en comparant l'information d'audience globale calculée par PoP avec le seuil d'audience défini, et :
- si le degré de popularité déterminé pour le contenu identifié est inférieur au seuil d'audience défini, le contenu identifié est étiqueté comme étant non populaire et la sélection de la ressource de distribution comprend la concentration du contenu demandé à l'intérieur d'un unique dispositif de diffusion de CDN du PoP optimum, dans lequel le dispositif de diffusion de CDN du PoP optimum présente un taux d'accès au cache plus élevé que le taux d'accès au cache de tous les dispositifs de diffusion au niveau du PoP optimum sélectionné pour le contenu identifié ,
- si le degré de popularité déterminé pour le contenu identifié est égal ou supérieur au seuil d'audience défini, le contenu identifié est étiqueté comme étant populaire et la sélection de la ressource de distribution et/ou de la politique de distribution comprend la diffusion du contenu identifié au sein de tous les dispositifs de diffusion de CDN du PoP optimum sélectionné pour le contenu identifié.

6. Procédé selon l'une quelconque des revendications 4 et 5, dans lequel la sélection de la ressource de distribution et/ou de la politique de distribution est effectuée par un dispositif de redirection (700) qui est un dispositif de diffusion de CDN configuré pour calculer une information d'audience au niveau du PoP au niveau duquel le dispositif de diffusion de CDN se trouve et pour recevoir l'information d'audience globale obtenue en provenance d'un routeur de demande (100) du réseau de distribution de contenu.

7. Procédé selon l'une quelconque des revendications précédentes, dans lequel la ressource de distribution est sélectionnée parmi un dispositif de diffusion de CDN (300ₓ, 300_{y}), une ressource physique et/ou une ressource logique appartenant au dispositif de diffusion de CDN (300ₓ, 300_{y}), un proxy, une ressource physique et/ou une ressource logique appartenant au proxy, et une ressource avec mise en cache.

8. Procédé selon l'une quelconque des revendications précédentes, dans lequel la politique de distribution est sélectionnée parmi une politique de rotation de cache, un temps d'expiration pour distribuer le contenu et une voie de diffusion pour distribuer le contenu.
